# EUROPEAN PATENT SPECIFICATION

(11) **EP 2 692 505 B1**
(45) Date of publication and mention of the grant of the patent: **07.01.2015**
(21) Application number: 13178506.5
(22) Date of filing: 30.07.2013
(51) Int. Cl.: B29C 45/74

(54) **Injection unit with induction heating**
Einspritzeinheit mit Induktionsheizung
Unité d'injection avec chauffage par induction

(30) Priority: 01.08.2012 JP 2012170896; 01.08.2012 JP 2012170897
(43) Date of publication of application: 05.02.2014
(73) Proprietor: SUMITOMO HEAVY INDUSTRIES, LTD., Tokyo 141-6025 (JP)
(72) Inventor: Yoshida, Jyun, Kanagawa, 237-8555 (JP)
(74) Representative: Hoffmann Eitle

(56) References cited:
- US-A- 4 678 420
- US-A1- 2003 121 908

## Description

### BACKGROUND OF THE INVENTION

### 1. Field of the Invention

The present invention relates to an injection unit.

### 2. Description of the Related Art

Injection units inject molten resin into a mold unit. The mold unit includes a stationary mold and a movable mold. A cavity space is formed between the stationary mold and the movable mold when the mold unit is clamped. The resin cooled and solidified in the cavity space is removed as a molding product after the mold unit is opened.

Injection units include a cylinder that is supplied with resin pellets serving as a molding material. The cylinder is externally heated by a heater, so that resin inside the cylinder is melted. The molten resin is injected into the molding unit via a nozzle that is formed in an end part of the cylinder.

The heater is inexpensive, and can be easily provided around the cylinder. Because of the thermal contact resistance between the heater and the cylinder, however, the efficiency of heating the cylinder is low, so that the resin inside the cylinder is heated with low efficiency.

Therefore, the technique of causing a cylinder to be heated by induction heating has been proposed. (See, for example, International Publication Pamphlet No. WO 2005/046962.) According to this technique, the cylinder itself generates heat. Therefore, the efficiency of heating the cylinder is high, so that the resin inside the cylinder is heated with good efficiency.

Another document is US 2003/0121908 A1, which discloses an apparatus for inductive and resistive heating of an object. In one embodiment, a heated nozzle comprises an elongated outer piece having a passageway formed therein. The ferromagnetic outer piece forms a closed magnetic circuit around a coil, and a heater coil generates inductive heat in the outer piece and the inner piece of the nozzle.

Another document is US 4,678,420 A1, which refers to an injection molding machine. A heating zone in a barrel is advantageously established by a plurality of induction coils energized by a high frequency pulsed or alternating current furnished from an inverter-type power supply. Coils or inductors surrounding the cylinder are embedded in an insulating shroud covering the cylinder.

### SUMMARY OF THE INVENTION

In the case of induction heating according to related art, the outer circumferential surface and its vicinity of the cylinder are intensively heated by induction heating because of the skin effect. Accordingly, the heat of the cylinder is likely to escape to outside air, so that the heat of the cylinder is less likely to be transferred to a molding material inside the cylinder.

The present invention is made in view of the above-described problem, and has an object of providing an injection unit that heats a molding material with good efficiency.

In order to solve the above-described problem, according to the present invention, an injection unit includes the features of independent claim 1.

According to another embodiment of the present invention, an injection unit includes a cylinder supplied with a molding material; and an induction heating part configured to cause the cylinder to be heated by induction heating, wherein the cylinder includes a cylinder body and a conductive layer provided inside the cylinder body, and a condition µ1 x σ1 > µ2 x σ2 holds, where µ1 is a magnetic permeability of the conductive layer, σ1 is a conductivity of the conductive layer, µ2 is a magnetic permeability of the cylinder body, and σ2 is a conductivity of the cylinder body.

According to an aspect of the present invention, an injection unit that heats a molding material with good efficiency is provided.

It is to be understood that both the foregoing general description and the following detailed description are exemplary and explanatory and not restrictive of the invention.

### BRIEF DESCRIPTION OF THE DRAWINGS

FIG. 1 is a diagram illustrating an injection unit according to a first embodiment of the present invention;
FIG. 2 is a cross-sectional view of a cylinder and a screw of FIG. 1;
FIG. 3 is a diagram illustrating eddy currents at the time of causing the cylinder and the screw of FIG. 2 to be heated by induction heating;
FIG. 4 is a diagram illustrating an injection unit according to a second embodiment of the present invention;
FIG. 5 is a diagram illustrating eddy currents at the time of the induction heating of a cylinder according to the second embodiment of the present invention; and
FIG. 6 is a graph illustrating an eddy current density at the time of the induction heating of a cylinder according to the second embodiment of the present invention and an eddy current density at the time of the induction heating of a conventional cylinder.

### DETAILED DESCRIPTION OF THE PREFERRED EMBODIMENTS

A description is given below, with reference to the accompanying drawings, of embodiments of the present invention. In the drawings, the same or corresponding elements are referred to by the same or corresponding reference numerals, and their description is omitted.

### [First Embodiment]

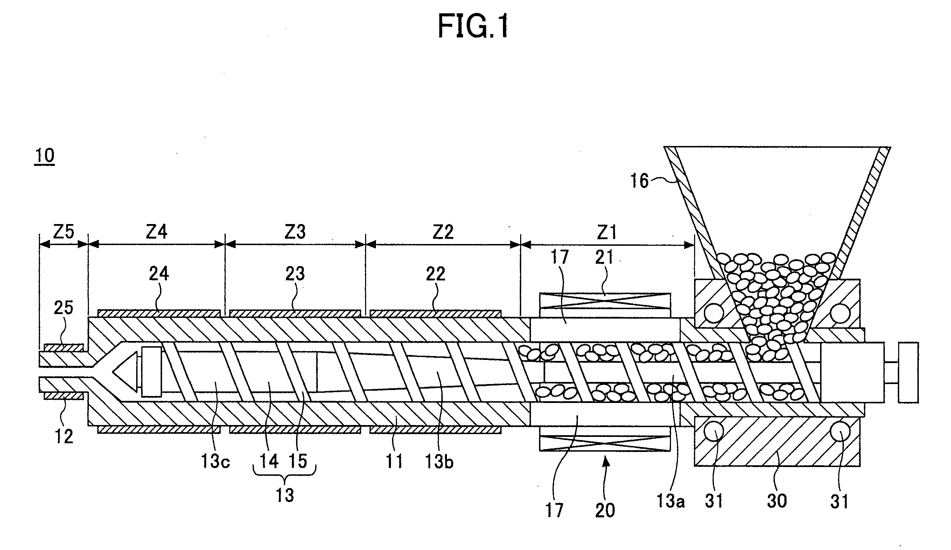

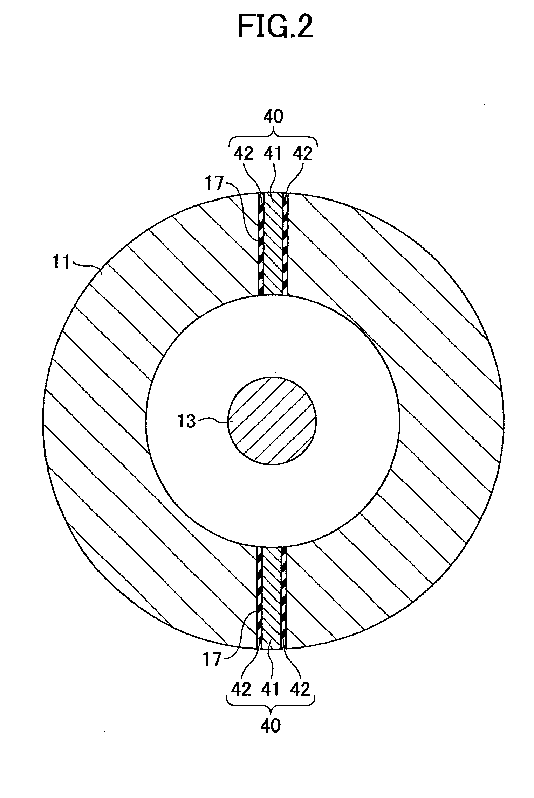

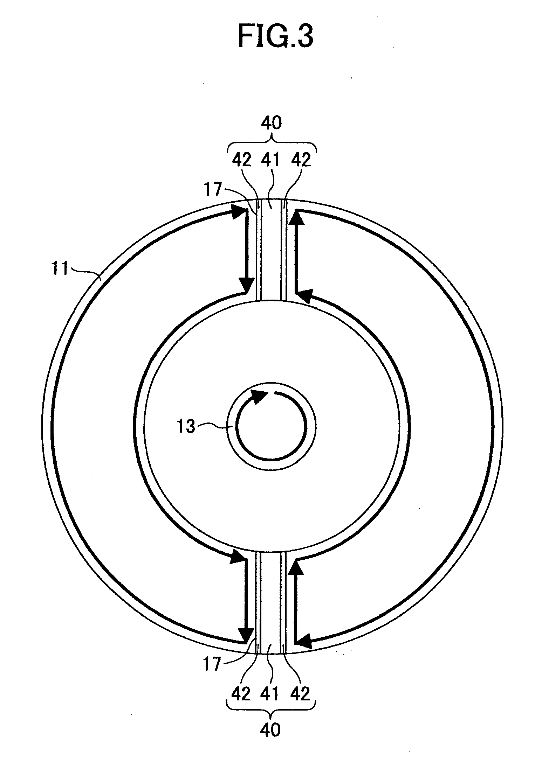

FIG. 1 is a diagram illustrating an injection unit 10 according to a first embodiment of the present invention. In FIG. 1, the illustration of lid members 40 illustrated in FIG. 2 is omitted in order to make the drawing easier to understand. FIG. 2 is a cross-sectional view of a cylinder 11 and a screw 13 of FIG. 1. In FIG. 2, the illustration of a flight 15 of the screw 13 illustrated in FIG. 1 is omitted in order to make the drawing easier to understand. FIG. 3 is a diagram illustrating eddy currents at the time of causing the cylinder 11 and the screw 13 of FIG. 2 to be heated by induction heating. In FIG. 3, arrows indicate flows of eddy currents. FIG. 3 is an example, and the direction of an eddy current is repeatedly reversed with the passage of time.

The injection unit 10 ejects resin melted inside the cylinder 11 via a nozzle 12, and fills a cavity space inside a mold unit (not illustrated) with the molten resin. The mold unit includes a stationary mold and a movable mold. The cavity space is formed between the stationary mold and the movable mold when the mold unit is clamped. The resin cooled and solidified in the cavity space is removed as a molding product after the mold unit is opened. Resin pellets serving as a molding material are supplied from a hopper 16 to a rear part of the cylinder 11.

For example, as illustrated in FIG. 1, the injection unit 10 includes the cylinder 11, which is supplied with resin pellets serving as a molding material, the screw 13 provided inside the cylinder 11 so as to be rotatable and axially movable, a heating unit 20 that heats the cylinder 11, and a cooling unit 30 that cools the cylinder 11.

The cylinder 11 is heated by the heating unit 20, so that resin inside the cylinder 11 is melted. The molten resin is injected into the mold unit via the nozzle 12 formed in an end part of the cylinder 11. The screw 13 serving as a feeding member to feed resin is provided inside the cylinder 11.

The screw 13 includes a screw rotating shaft 14 and the flight 15 as a unitary structure. The flight 15 is provided helically around the screw rotating shaft 14. When the screw 13 rotates, the flight (thread) 15 of the screw 13 moves, so that resin pellets filling in the groove of the screw 13 are fed forward.

For example, as illustrated in FIG. 1, the screw 13 is divided into a feed part 13a, a compression part 13b, and a metering part 13c from rear (the hopper 16 side) to front (the nozzle 12 side) in its axial direction. In the feeding part 13a, resin is received and conveyed forward. In the compression part 13b, the fed (conveyed) resin is caused to melt while being compressed. In the metering part 13c, the molten resin is metered by a fixed amount. The groove of the screw 13 is deep in the feed part 13a and shallow in the metering part 13c, and becomes shallower toward the front in the compression part 13b. The screw 13 is not limited to a particular configuration. For example, the groove of the screw 13 may have a constant depth.

The heating unit 20 includes multiple heating sources 21, 22, 23, 24 and 25 arranged along the axial directions of the cylinder 11. The multiple heating sources 21 through 25 respectively heat corresponding zones (five zones Z1, Z2, Z3, Z4 and Z5 in FIG. 1) into which the cylinder 11 is axially divided. The multiple heating sources 21 through 25 are subjected to feedback control so that the zones Z1 through Z5 are at respective set temperatures.

As the multiple heating sources 21 through 25, the heating unit 20 includes an induction coil, serving as an induction heating part to cause the cylinder 11 to be heated by induction heating, and heaters to externally heat the cylinder 11. For example, the heating unit 20 includes an induction coil as the heating source 21 and heaters as the heating sources 22 through 25. Hereinafter, the heating source 21 is referred to as the "induction coil 21."

The induction coil 21 is arranged concentrically with and outside the cylinder 11. The induction coil 21 and the cylinder 11 are spaced from each other for insulation. A heat insulation material (not illustrated) may be interposed between the induction coil 21 and the cylinder 11.

When the induction coil 21 is supplied with an alternating current, an alternating magnetic field is produced in the cylinder 11 inside the induction coil 21. As a result, an eddy current (induced current) flows in the cylinder 11, so that the cylinder 11 itself generates heat. Because the cylinder 11 itself generates heat, the cylinder 11 is heated with good efficiency.

For example, as illustrated in FIG. 1, the induction coil 21 may heat the zone Z1, which is the closest to the cooling unit 30 among the multiple zones Z1 through Z5 heated by the heating unit 20. This is because in the zone Z1 closest to the cooling unit 30, the heat of the cylinder 11 is likely to escape to the cooling unit 30 via the cylinder 11, so that the amount of heat generated to maintain the cylinder 11 at a predetermined temperature increases.

The heating position of the induction coil 21 or the number of induction coils 21 is not limited in particular. For example, the induction coil 21 may heat the zone Z5 (that is, the nozzle 12), which is the farthest from the cooling unit 30. Furthermore, the heating unit 20 may include multiple induction coils.

The induction coil 21 is connected to an inverter. The inverter converts a direct current into an alternating current of any frequency under the control of a controller including a microcomputer. The inverter may vary the amplitude and frequency of an alternating current supplied to the induction coil 21.

The cooling unit 30 is provided on the rear side of the heating unit 20. The cooling unit 30 cools the rear part of the cylinder 11 and maintains the rear part of the cylinder 11 at a temperature at which the surfaces of resin pellets are prevented from melting, so as to prevent the occurrence of the bridge (agglomeration) of resin pellets in the rear part of the cylinder 11 and the hopper 16. The cooling unit 30 includes a passage 31 for a cooling medium such as water or air.

Next, a description is given of an operation of the injection unit 10.

When the injection unit 10 causes the screw 13 to rotate, the flight (thread) 15 of the screw 13 moves, so that resin pellets filling in the groove of the screw 13 are fed forward. The resin is heated by heat from the cylinder 11 while moving forward inside the cylinder 11, and is totally melted in the end part of the cylinder 11. As the molten resin is stored in front of the screw 13, the screw 13 moves backward. When the screw 13 moves backward a predetermined distance so that a predetermined amount of resin is stored in front of the screw 13, the screw 13 is caused to stop rotating. The injection unit 10 causes the screw 13 to move forward with the rotation of the screw 13 being stopped, so that the molten resin is injected into the mold unit via the nozzle 12 formed in the end part of the cylinder 11.

Next, a description is given of a cylinder configuration, referring again to FIG. 1 through FIG. 3.

In this embodiment, as illustrated in FIG. 1, in part of the cylinder 11 subjected to induction heating (for example, the zone Z1), slits 17 are provided through the cylinder 11 from its outer circumferential surface to its inner circumferential surface. The slits 17 may extend to other zones (for example, the zone Z2).

As illustrated in FIG. 3, the slits 17 divide an eddy current that flows in a circumferential direction at the outer circumferential surface and its vicinity of the cylinder 11 (hereinafter referred to as "cylinder outer circumferential part"). The divided eddy current is directed radially inward along the slits 17. Then, after flowing in a circumferential direction at the inner circumferential surface and its vicinity of the cylinder 11 (hereinafter referred to as "cylinder inner circumferential part"), the divided eddy current is directed radially outward along the slits 17. Thus, the presence of the slits 17 causes an eddy current to loop, so that an eddy current flows not only in the cylinder outer circumferential part but also in the cylinder inner circumferential part. Therefore, assuming that the amount of heat generated per unit time of the cylinder 11 as a whole remains the same as in a conventional cylinder, the amount of heat generated per unit time of the cylinder outer circumferential part decreases and the amount of heat generated per unit time of the cylinder inner circumferential part increases, so that the inner circumferential surface of the cylinder 11 is more likely to be heated. Accordingly, the efficiency of heating resin inside the cylinder 11 is better than conventionally.

In the conductive screw 13 provided inside the cylinder 11, an eddy current is so generated as to cancel a change in a magnetic field in the screw 13. The magnetic field in the screw 13 is a composite magnetic field of the magnetic field produced by the electric current of the induction coil 21 and the magnetic field produced by the eddy current of the cylinder 11.

Without the slits 17, the generation of an eddy current in the cylinder 11 concentrates in the cylinder outer circumferential part because of the skin effect. This eddy current of the cylinder outer circumferential part is so generated as to cancel a change in the magnetic field produced by the electric current of the induction coil 21. Therefore, a change in the magnetic field in the screw 13 is limited, so that an eddy current is hardly generated in the screw 13.

According to this embodiment, because the slits 17 are provided, eddy currents of directions opposite to each other are generated in the cylinder inner circumferential part and the cylinder outer circumferential part as illustrated in FIG. 3. Therefore, the magnetic field produced by the eddy current of the cylinder inner circumferential part and the magnetic field produced by the eddy current of the cylinder outer circumferential part cancel each other. Accordingly, the magnetic field produced by the electric current of the induction coil 21 is likely to penetrate into the screw 13, so that a substantial change is caused in the magnetic field in the screw 13. Accordingly, as illustrated in FIG. 3, an eddy current is generated in the screw 13, so that the screw 13 is heated by induction heating along with the cylinder 11. Because of the skin effect, the eddy current concentrates on a surface of the screw 13 that comes into contact with resin and on the vicinity of the surface. The heat of the screw 13 is first transferred to the resin and is then escaped to outside air or the cooling unit 30 via the cylinder 11. Therefore, the efficiency of heating resin is further improved.

The slits 17 may be, for example, holes elongated in the axial directions of the cylinder 11 as illustrated in FIG. 1, so as to facilitate the division of an eddy current that flows in a circumferential direction in the cylinder outer circumferential part. The slits 17 may be formed inside and entirely over the induction coil 12 or may project outward from inside the induction coil 12. That is, the slits 17 may be longer than or equal to the induction coil 21 in its axial directions. In other words, the slits 17 may extend from one axial end to another axial end of the induction coil 21 inside the induction coil 21 or may extend to project outward from inside the induction coil 21. The slits 17 may vary in shape. For example, the slits 17 may have a helical shape.

As illustrated in FIG. 1 and FIG. 2, two or more slits 17 may be provided. The slits 17 may be equally spaced (for example, spaced 180° in FIG. 2) in a circumferential direction of the cylinder 11. The number of slits 17 may be one.

The injection unit 10 may further includes the lid members 40 that fill the slits 17 so as to prevent a leakage of resin. In the zone Z1 closest to the cooling unit 30, resin is not melted. Therefore, if the width of the slits 17 is smaller than the size of resin pellets, the lid members 40 may be omitted.

The lid members 40 may be provided inside the slits 17 as illustrated in FIG. 2 or may be provided outside the slits 17.

The lid member 40 may be formed of either a magnetic material or a non-magnetic material. If the cylinder 11 is formed of a non-magnetic material, however, it is preferable that the lid members 40 also be formed of a non-magnetic material so as to prevent the magnetic field produced by the electric current of the induction coil 21 from concentrating in the lid members 40.

The lid members 40 include, for example, a metal lid body 41 and multiple insulating layers 42. The insulating layers 42 are formed of, for example, ceramics, glass or the like. The insulating layers 42 are interposed between the lid body 41 and the cylinder 11 to insulate the lid body 41 and the cylinder 11 from each other.

Parts of the lid members 40 that come into contact with the cylinder 11 may have an insulation property. The lid members 40 may be entirely formed of an insulating material (for example, ceramics or glass). This simplifies the structure of the lid members 40. The insulating layers 42 may alternatively be formed on the cylinder 11.

### [Second Embodiment]

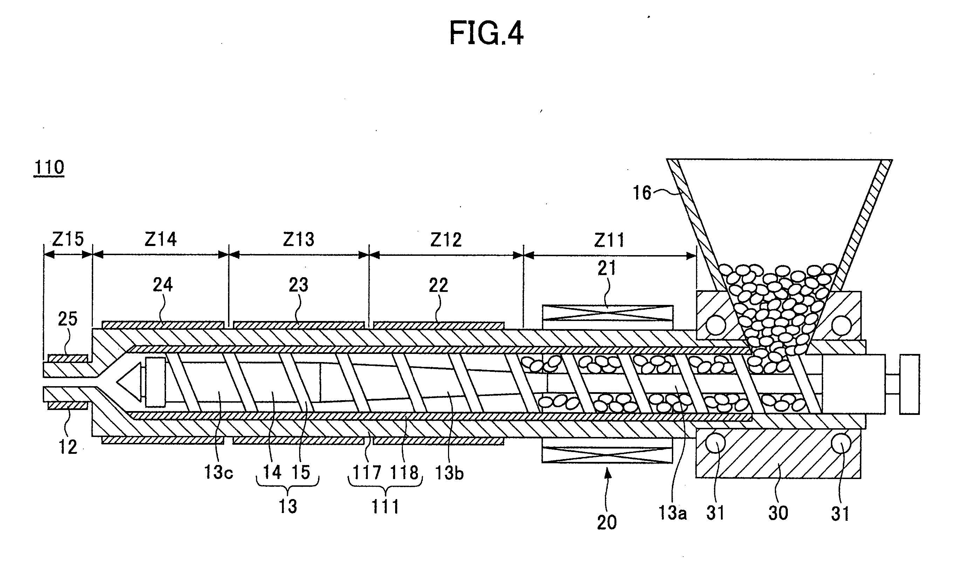

An injection unit according to a second embodiment includes the same components as those of the injection unit 10 according to the first embodiment except for the cylinder 11. A description is given below, with reference to FIG. 4, of an injection unit 110 of this embodiment. The description is focused on a configuration of a cylinder 111. Components other than the cylinder 111 are referred to by the same reference numerals as in the first embodiment, and their description is omitted.

The cylinder 111 is divided into multiple zones Z11, Z12, Z13, Z14 and Z15 along an axial direction of the cylinder 111, which are individually heated. The zone Z11, which is the closest to the cooling unit 30, may be heated with the induction coil 21. The heating position of the induction coil 21 or the number of induction coils 21 is not limited in particular.

The cylinder 111 includes a cylinder body 117 and a conductive layer 118, which is provided inside the cylinder body 117. A magnetic permeability µ1 of the conductive layer 118 may be higher than a magnetic permeability µ2 of the cylinder body 117. Here, the term "magnetic permeability" means magnetic permeability in a condition without an external magnetic field, that is, initial magnetic permeability.

The cylinder body 117 is formed of a highly durable material so as not to be deformed by the injection pressure of resin. Examples of the material of the cylinder body 117 include nitride steel, whose surface is hardened by nitriding. Examples of steel subjected to nitriding include aluminum chromium molybdenum steels, chromium molybdenum steels, nickel chromium molybdenum steels.

The conductive layer 118 is provided inside the cylinder body 117. The conductive layer 118 may be fixed to the inner circumferential surface of the cylinder body 117. The cylinder body 117 and the tubular conductive layer 118 may be fit to each other by shrink fitting or expansion fitting. This facilitates the manufacturing of the cylinder 111.

A wide variety of methods are available for the manufacturing of the cylinder 111. For example, the cylinder 111 may be manufactured by depositing the conductive layer 118 on the inner circumferential surface of the cylinder body 117. Alternatively, the cylinder 111 may be manufactured by bonding the conductive layer 118 to the inner circumferential surface of the cylinder body 117 with an adhesive agent. In the case of using an adhesive agent, an adhesive layer is formed between the conductive layer 118 and the cylinder body 117. The adhesive layer may have an insulation property.

The magnetic permeability µ1 of the conductive layer 118 is higher than the magnetic permeability µ2 of the cylinder body 117. The material of the conductive layer 118 may be a magnetic material, and is desirably a soft magnetic material, which has a low coercivity and a high magnetic permeability among the magnetic materials. Examples of soft magnetic materials include carbon steels (such as SS materials and SC materials), magnetic steels (such as silicon steel), permalloys (Fe-Ni based alloys), and permendurs (Fe-Co-V based alloys). Here, the "SS materials" refer to rolled steels for general structure defined by Japanese Industrial Standard (JIS) G 3101:2010, and the "SC materials" refer to carbon steel castings defined by Japanese Industrial Standard (JIS) G 5101:1991.

The conductive layer 118 is provided in at least a zone heated by the induction coil 21 (the zone Z11 in this embodiment) in the multiple zones Z11 through Z15 heated by the heating unit 20, and may extend to the other zones Z12 through Z14 as illustrated in FIG. 4.

The conductive layer 118 may be provided through the helical induction coil 21 so as to facilitate the passage of the alternating magnetic field, produced inside the induction coil 21 by the alternating current of the induction coil 21, through the conductive layer 118. In this case, the axial length of the conductive layer 118 is greater than the axial length of the induction coil 21.

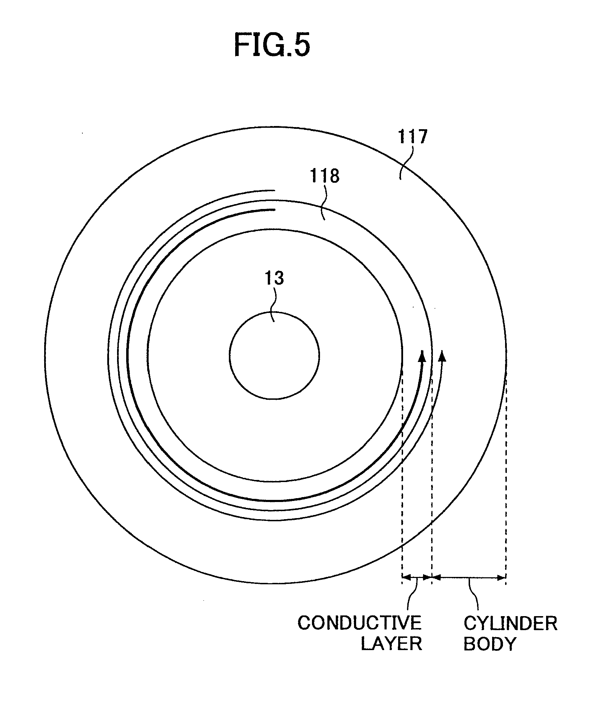

FIG. 5 is a diagram illustrating eddy currents at the time of the induction heating of a cylinder according to the second embodiment of the present invention. In FIG. 5, the illustration of the flight 15 of the screw 13 is omitted in order to make the drawing easier to understand. In FIG. 5, arrows indicate flows of eddy currents. FIG. 5 is an example, and the direction of an eddy current is repeatedly reversed with the passage of time.

The cylinder 111 of this embodiment includes the conductive layer 118 that has a higher magnetic permeability than the cylinder body 117. Therefore, the alternating magnetic field generated inside the induction coil 21 by the alternating current of the induction coil 21 is more likely to pass through the conductive layer 118 than the cylinder body 117. Therefore, an eddy current is more likely to be generated in the conductive layer 118, so that the conductive layer 118 is more likely to be heated. The heated conductive layer 118 is provided inside the cylinder body 117 and is closer to resin than is the cylinder body 117. Therefore, the resin is heated with good efficiency. In order to increase the efficiency of heating resin, the inner circumferential surface of the conductive layer 118 may be a surface that comes into contact with resin.

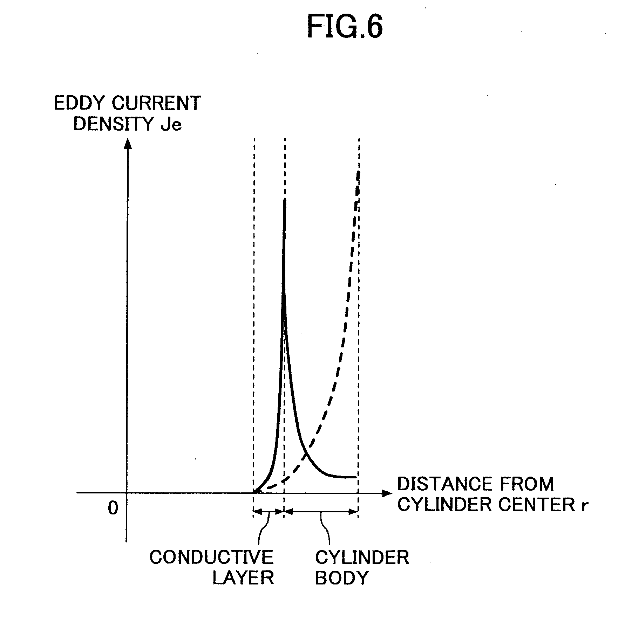

FIG. 6 is a graph illustrating an eddy current density at the time of the induction heating of a cylinder according to the second embodiment of the present invention and an eddy current density at the time of the induction heating of a conventional cylinder. The horizontal axis represents a distance from the center of the cylinder, r, and the vertical axis represents the effective value of the eddy current density, Je. In FIG. 6, a bold solid line indicates the eddy current density in the cylinder according to this embodiment and a bold broken line indicates the eddy current density in the conventional cylinder. The conventional cylinder is formed only of nitride steel, which is the same as the material of the cylinder body 117 of this embodiment. Furthermore, the conventional cylinder has the same dimensions (inner diameter, outer diameter, etc.) and shape as the cylinder 111 of this embodiment.

As indicated by a bold broken line in FIG. 6, the eddy current density of the conventional cylinder decreases radially toward the inside of the cylinder because of the skin effect. As the eddy current density decreases, Joule heat decreases. Therefore, the outer circumferential surface and its vicinity of the cylinder are intensively heated. Accordingly, heat is more likely to escape to outside air from the outer circumferential surface of the cylinder and to the cooling unit via the cylinder, so that the inner circumferential surface of the cylinder is less likely to be heated. Accordingly, the efficiency of heating resin inside the cylinder is low.

On the other hand, according to this embodiment, as indicated by a bold solid line in FIG. 6, an eddy current is likely to be generated in the conductive layer 118, so that the conductive layer 118 is likely to be heated. The heated conductive layer 118 is provided inside the cylinder body 117, and is closer to resin than is the cylinder body 117. Accordingly, assuming that the amount of heat generated per unit time of the cylinder 111 as a whole remains the same as in a conventional cylinder, the inner circumferential surface of the cylinder 111 is more likely to be heated, so that the efficiency of heating resin is better than conventionally.

As indicated by a bold solid line in FIG. 6, the eddy current density of the conductive layer 118 decreases radially toward the inside of the cylinder 111 because of the skin effect. The eddy current density of the conductive layer 118 is highest at the outer circumferential surface of the conductive layer 118 and is lowest at the inner circumferential surface of the conductive layer 118.

As the thickness of the conductive layer 118 increases, the amount of eddy current of the conductive layer 118 increases, so that the amount of heat generated by the conductive layer 118 increases. When the thickness of the conductive layer 118 increases to some extent, however, the amount of eddy current of the conductive layer 118 hardly increases because of the skin effect, so that the amount of heat generated by the conductive layer 118 hardly increases. Furthermore, the amount of heat generated by the conductive layer 118 decreases from the outer circumferential surface toward the inner circumferential surface. Therefore, if the thickness of the conductive layer 118 becomes excessively large, heat is less likely to be transferred from the conductive layer 118 to resin, and the thermal resistance of the conductive layer 118 increases. Accordingly, the thickness of the conductive layer 118 is determined in view of the balance between the amount of heat generated by the conductive layer 118 and the thermal resistance of the conductive layer 118.

The conductive layer 118 may be formed of a soft magnetic material, and may be excited by the alternating magnetic field generated inside the induction coil 21 by the alternating current of the induction coil 21. The reversal of the magnetic pole of the conductive layer 118 causes an eddy current to be also generated in the cylinder body 117 provided outside the conductive layer 118. The direction of the eddy current of the cylinder body 117 and the direction of the eddy current of the conductive layer 118 may be the same as illustrated in FIG. 5.

The eddy current density of the cylinder body 117 becomes higher at a position closer to the conductive layer 118. The density of the eddy current generated in the cylinder body 117 is highest at the inner circumferential surface of the cylinder body 117 and is lowest at the outer circumferential surface of the cylinder body 117. The amount of heat generated by the cylinder body 117 is largest at the inner circumferential surface of the cylinder body 117. Therefore, the heat of the cylinder body 117 is likely to be transferred to resin via the conductive layer 118.

The eddy current density distribution of the cylinder body 117 is not limited to that illustrated in this embodiment as long as the eddy current density of the cylinder body 117 is maximized at the outer circumferential surface of the conductive layer 118.

In the case of causing the same alternating current (an alternating current of the same frequency and the same amplitude) to flow through the induction coil 21, the amount of heat generated by a cylinder per unit time increases as the product of the magnetic permeability of the cylinder and the conductivity of the cylinder increases.

Therefore, it is desirable that the condition µ1 × σ1 > µ2 × σ2 hold, where µ1 is the magnetic permeability of the conductive layer 118, σ1 is the conductivity of the conductive layer 118, µ2 is the magnetic permeability of the cylinder body 117, and σ2 is the conductivity of the cylinder body 117. Assuming that the amount of heat generated per unit time by the cylinder 111 as a whole remains the same, the proportion of the amount of heat generated per unit time by the cylinder body 117 decreases, and the proportion of the amount of heat generated per unit time by the conductive layer 118 increases. Because the conductive layer 118 is closer to resin than is the cylinder body 117, the efficiency of heating resin is further improved.

The magnitude relationship between the magnetic permeability of the conductive layer 118, µ1, and the magnetic permeability of the cylinder body 117, µ2, is not limited to that illustrated in this embodiment as long as the condition µ1 × σ1 > µ2 × σ2 holds.

A description is given above of embodiments of the injection unit. The present invention, however, is not limited to the above-described embodiments, and variations and modifications may be made without departing from the scope of the present invention.

For example, while the screw 13 is conductive and the induction coil 21 causes each of the cylinder 11/111 and the screw 13 to be heated by induction heating in the above-described embodiments, alternatively, the screw 13 may have an insulation property and the induction coil 21 may cause only the cylinder 11/111 to be heated by induction heating.

Furthermore, the injection unit, which is an inline screw type according to the above-described embodiments, may alternatively be a plunger pre-plasticizing type or a screw pre-plasticizing type. According to the pre-plasticizing type, resin melted in a plasticizing cylinder is supplied to an injection cylinder, and the molten resin is injected into a mold unit from the injection cylinder. According to the pre-plasticizing type, the induction coil may cause either of the plasticizing cylinder and the injection cylinder to be heated by induction heating. Furthermore, a feeding member that is provided inside the plasticizing cylinder to feed resin is a plasticizing plunger in the case of the plunger pre-plasticizing type and is a plasticizing screw in the case of the screw pre-plasticizing type. Furthermore, in either of the plunger pre-plasticizing type and the screw pre-plasticizing type, a feeding member that is provided inside the injection cylinder to feed resin is an injection plunger.

Furthermore, the above-described first embodiment and second embodiment may be combined. For example, in part of the cylinder 111 of the second embodiment subjected to induction heating (the zone Z11), one or more slits may be provided through the cylinder 111 from its outer circumferential surface to its inner circumferential surface.

## Claims

1. An injection unit (10, 110), comprising:
a cylinder (11, 111) supplied with a molding material; and
an induction heating part (21) configured to cause the cylinder (11, 111) to be heated by induction heating, **characterized in that**
a slit (17) provided to cause an eddy current to loop is formed through the cylinder (11, 111) from an outer circumferential surface to an inner circumferential surface thereof in a part of the cylinder (11, 111) subjected to the induction heating.

2. The injection unit (10, 110) as claimed in claim 1, further comprising:
a conductive feeding member (13) provided inside the cylinder (11, 111) and configured to feed the molding material inside the cylinder (11, 111), wherein the induction heating part (21) is
configured to cause the cylinder (11, 111) and the conductive feeding member (13) to be heated by induction heating.

3. The injection unit (10, 110) as claimed in claim 1 or 2, further comprising:
a lid member (40) configured to fill in the slit (17).

4. The injection unit (10, 110) as claimed in claim 3, wherein a part of the lid member (40) that is in contact with the cylinder (11, 111) has an insulation property.

5. The injection unit (110) as claimed in any of claims 1 to 4, wherein
the cylinder (111) includes a cylinder body (117) and a conductive layer (118) provided inside the cylinder body (117), and
a condition µ1 × σ1 > µ2 × σ2 holds, where µ1 is a magnetic permeability of the conductive layer (118), σ1 is a conductivity of the conductive layer (118), µ2 is a magnetic permeability of the cylinder body (117), and σ2 is a conductivity of the cylinder body (117).

6. An injection unit (110), comprising:
a cylinder (111) supplied with a molding material; and
an induction heating part (21) configured to cause the cylinder (111) to be heated by induction heating, **characterised in that** the cylinder (111) includes a cylinder body (117) formed of steel and a conductive layer (118) provided inside the cylinder body (117), and a condition µ1 x σ1 > u2 x σ2 holds, where µ1 is
a magnetic permeability of the conductive layer (118), σ1 is a conductivity of the conductive layer (118), µ2 is a magnetic permeability of the cylinder body (117), and σ2 is a conductivity of the cylinder body (117).

7. The injection unit (110) as claimed in claim 5 or 6, wherein
the conductive layer (118) has a tubular shape, and
the cylinder body (117) and the conductive layer (118) are fit to each other by shrink fitting or expansion fitting.

## Patentansprüche

1. Einspritzeinheit (10, 110) mit:
einem Zylinder (11, 111) dem eine Formmasse eingegeben ist; und
einem Induktionsheizungsabschnitt (21), der ausgelegt ist, den Zylinder (11, 111) dazu zu veranlassen, durch Induktionsheizung geheizt zu werden,
**dadurch gekennzeichnet, dass**
ein Schlitz (17), der dazu vorgesehen ist, einen Wirbelstrom zur Schleifenbildung zu veranlassen, durch den Zylinder (11, 111) von einer Außenumfangsfläche zu einer Innenumfangsfläche davon in einem Teil des Zylinders (11, 111) ausgebildet ist, der dem Induktionsheizen ausgesetzt ist.

2. Einspritzeinheit (10, 110) nach Anspruch 1 ferner mit:
einem leitfähigen Zufuhrelement (13), das innerhalb des Zylinders (11, 111) angeordnet ist, und ausgelegt ist, innerhalb des Zylinders (11, 111) die Formmasse zuzuführen, wobei der Induktionsheizungsabschnitt (21) ausgelegt ist, den Zylinder (11, 111) und das leitfähige Zufuhrelement (13) dazu zu veranlassen, durch Induktionsheizung geheizt zu werden.

3. Einspritzeinheit (10, 110) nach Anspruch 1 oder 2, ferner mit:
einem Einlageelement (40), das ausgelegt ist, den Schlitz (17) auszufüllen.

4. Einspritzeinheit (10, 110) nach Anspruch 3, bei der ein Abschnitt des Einlageelements (40), der mit dem Zylinder (11, 111) in Kontakt ist, eine Isolationseigenschaft aufweist.

5. Einspritzeinheit (110) nach einem der Ansprüche 1 bis 4, bei welcher
der Zylinder (111) einen Zylinderkörper (117) und eine leitfähige Schicht (118) aufweist, die in dem Zylinderkörper (117) angeordnet ist, und
eine Beziehung von µ1 x σl > µ2 x σ2 gilt, wobei µ1 eine magnetische Permeabilität der leitfähigen Schicht (118) ist, σ1 eine Leitfähigkeit der leitfähigen Schicht (118) ist, µ2 eine magnetische Permeabilität des Zylinderkörpers (117) ist, und σ2 eine Leitfähigkeit des Zylinderkörpers (117) ist.

6. Einspritzeinheit (110) mit:
einem Zylinder (111) dem eine Formmasse eingegeben ist; und
einem Induktionsheizungsabschnitt (21), der ausgelegt ist, den Zylinder (111) dazu zu veranlassen, durch Induktionsheizung geheizt zu werden,
**dadurch gekennzeichnet, dass** der Zylinder (111) einen Zylinderkörper (117) aus Stahl und eine leitfähige Schicht (118) aufweist, die in dem Zylinderkörper (117) angeordnet ist, und eine Beziehung von µ1 x σ1 > µ2 x σ2 gilt, wobei
µ1 eine magnetische Permeabilität der leitfähigen Schicht (118) ist, σ1 eine Leitfähigkeit der leitfähigen Schicht (118) ist, µ2 eine magnetische Permeabilität des Zylinderkörpers (117) ist, und σ2 eine Leitfähigkeit des Zylinderkörpers (117) ist.

7. Einspritzeinheit (110) nach Anspruch 5 oder 6, bei der
die leitfähige Schicht (118) eine röhrenförmige Form aufweist, und
der Zylinderkörper (117) und die leitfähige Schicht (118) durch Aufschrumpfen oder Ausdehnungs-Passung aneinander befestigt sind.

## Revendications

1. Unité d'injection (10, 110), comprenant :
un cylindre (11, 111) alimenté avec un matériau de moulage ; et
une partie de chauffage par induction (21) configurée pour faire en sorte que le cylindre (11, 111) soit chauffé par chauffage par induction, **caractérisée en ce que** une fente (17) prévue pour faire en sorte qu'un courant de Foucault en boucle soit formé à travers le cylindre (11, 111) d'une surface circonférentielle extérieure à une surface circonférentielle intérieure de celui-ci dans une partie du cylindre (11, 111) soumise au chauffage par induction.

2. Unité d'injection (10, 110) selon la revendication 1, comprenant en outre :
un élément d'alimentation conducteur (13) disposé à l'intérieur du cylindre (11, 111) et configuré pour alimenter en matériau de moulage l'intérieur du cylindre (11, 111), dans laquelle la partie de chauffage par induction (21) est
configurée pour faire en sorte que le cylindre (11, 111) et l'élément d'alimentation conducteur (13) soient chauffés par chauffage par induction.

3. Unité d'injection (10, 110) selon la revendication 1 ou 2, comprenant en outre :
un élément couvercle (40) configuré pour remplir la fente (17).

4. Unité d'injection (10, 110) selon la revendication 3, dans laquelle une partie de l'élément couvercle (40) qui est en contact avec le cylindre (11, 111) possède une propriété isolante.

5. Unité d'injection (110) selon une quelconque des revendications 1 à 4, dans laquelle
le cylindre (111) comprend un corps de cylindre (117) et une couche conductrice (118) disposée à l'intérieur du corps de cylindre (117), et
une condition µ1 x σ1 > µ2 x σ2 est maintenue, où µ1 est une perméabilité magnétique de la couche conductrice (118), σ1 est une conductivité de la couche conductrice (118), µ2 est une perméabilité magnétique du corps de cylindre (117), et σ2 est une conductivité du corps de cylindre (117).

6. Unité d'injection (110), comprenant :
un cylindre (111) alimenté avec un matériau de moulage ; et
une partie de chauffage par induction (21) configurée pour faire en sorte que le cylindre (111) soit chauffé par chauffage par induction, **caractérisée en ce que** le cylindre (111) comprend un corps de cylindre (117) formé d'acier et une couche conductrice (118) disposée à l'intérieur du corps de cylindre (117), et une condition µ1 x σ1 > µ2 x σ2 est maintenue, où µ1 est
une perméabilité magnétique de la couche conductrice (118), σ1 est une conductivité de la couche conductrice (118), µ2 est une perméabilité magnétique du corps de cylindre (117), et σ2 est une conductivité du corps de cylindre (117).

7. Unité d'injection (110) selon la revendication 5 ou 6, dans laquelle
la couche conductrice (118) présente une forme tubulaire, et
le corps de cylindre (117) et la couche conductrice (118) sont ajustés l'un à l'autre par rétractation ou dilatation.
